# EUROPÄISCHE PATENTANMELDUNG

(11) **EP 1 517 531 A1**
(43) Veröffentlichungstag der Anmeldung: **23.03.2005**
(21) Anmeldenummer: 03405687.9
(22) Anmeldetag: 18.09.2003
(51) Int. Cl.: H04M 15/00, G06F 17/60, H04Q 7/38

(54) **Vorrichtungen und Verfahren zum Verrechnen von Kommunikationskosten**

(71) Anmelder: Swisscom Mobile AG, 3050 Bern (CH)
(72) Erfinder: Versteeg, Ernst, 3012 Bern (CH)
(74) Vertreter: BOVARD AG - Patentanwälte

(57) **Zusammenfassung**

In einem computerbasierten System (1) zum Verrechnen von Kommunikationskosten eines Teilnehmers in einem Kommunikationsnetz (2), werden Verrechnungsinstruktionen, die Angaben zur Identifizierung eines Kontos umfassen, dem die Kommunikationskosten zu verrechnen sind, entgegengenommen und einem Teilnehmer sowie einer ersten Zeitangabe zugeordnet gespeichert. Im computerbasierten System (1) werden zudem Kostenbelege, die Angaben über Kommunikationskosten des Teilnehmers umfassen, dem Teilnehmer zugeordnet gespeichert. Die gespeicherten Kostenbelege eines Teilnehmers werden durch das computerbasierte System (1) den gespeicherten Verrechnungsinstruktionen des Teilnehmers zugeordnet, jeweils auf Grund der zugeordneten ersten Zeitangabe und einer in den gespeicherten Kostenbelegen enthaltenen zweiten Zeitangabe. Die in einem Kostenbeleg angegebenen Kommunikationskosten des Teilnehmers werden dem Konto verrechnet, das durch die dem Kostenbeleg zugeordneten Verrechnungsinstruktionen bestimmt ist. Das computerbasierte System (1) ermöglicht Verrechnungsinstruktionen von Teilnehmern unabhängig vom Zeitpunkt der Entstehung der Kommunikationskosten respektive unabhängig von der Inanspruchnahme der Kommunikationsdienste entgegenzunehmen. Insbesondere können Verrechnungsinstruktionen für die Zuweisung der Kommunikationskosten eines ersten Teilnehmers auch von einem zweiten Teilnehmer entgegengenommen werden.

## Beschreibung

### Technisches Gebiet

Die vorliegende Erfindung betrifft Vorrichtungen und ein Verfahren zum Verrechnen von Kommunikationskosten. Die Erfindung betrifft insbesondere ein computerbasiertes System und ein Verfahren zum Verrechnen von Kommunikationskosten eines Teilnehmers in einem Kommunikationsnetz, wobei Kostenbelege mit Kommunikationskosten des Teilnehmers an das computerbasierte System übermittelt werden und wobei Verrechnungsinstruktionen mit Angaben zur Identifizierung eines Kontos, dem die Kommunikationskosten zu verrechnen sind, an das computerbasierte System übermittelt werden, sowie ein Computerprogrammprodukt zur Steuerung eines oder mehrerer Prozessoren des computerbasierten Systems.

### Stand der Technik

In Fällen, in denen ein Teilnehmer eines Kommunikationsnetzes ein Kommunikationsendegerät in unterschiedlichen Rollen verwendet, beispielsweise als Privatperson für private Gespräche oder als Angestellter für Geschäftsgespräche, ist es oft wünschenswert, die dabei entstehenden Kommunikationskosten verschiedenen Kostenstellen zu verrechnen, beispielsweise einem Privatkonto des Teilnehmers oder einem Geschäftskonto des Geschäftsinhabers, bei dem der Teilnehmer angestellt ist.

In herkömmlichen computerbasierten Hauszentralen, die von Firmen betrieben werden, besteht in der Regel die Möglichkeit, bei der firmeninternen Verrechnung zwischen Privatgesprächen und Geschäftsgesprächen zu unterscheiden, wenn durch die Mitarbeiter vor der Eingabe der Rufnummer definierte Vorwahlnummern eingegeben werden.

In der Patentanmeldung EP 1 006 707 werden ein Verfahren und ein computerbasiertes System beschrieben, welche einem Telefonbenutzer eine Dienstoption anbieten, um jeweils vor der Erstellung einer Telefonverbindung ein Konto zu bestimmen, auf das die Kommunikationskosten der Telefonverbindung verrechnet werden sollen. Hat ein Teilnehmer diese Dienstoption gewählt, wird von ihm vor der Erstellung einer Telefonverbindung zur Bestimmung des Kontos jeweils die Angabe einer Kontonummer verlangt, beispielsweise unter gesprochener Menuführung. Unmittelbar nach der Beendung der Telefonverbindung werden die dabei entstandenen Kommunikationskosten gemäss EP 1 006 707 von der betreffenden Vermittlungsstelle automatisch dem angegebenen Konto verrechnet.

In der Patentschrift US 6,282,274 wird ein Verfahren beschrieben, das einem Telefonbenutzer ermöglicht, vor der Erstellung einer Telefonverbindung für einen ausgehenden Anruf über die Schnittstelle seines Kommunikationsendegeräts eine Verrechnungspräferenz anzugeben. Die Eingabe der Verrechnungspräferenz wird entweder vom Kommunkiationssendegerät oder von einer Vermittlungsstelle vor der Erstellung der Verbindung angefordert. Gemäss US 6,282,274 werden die angegebene Verrechnungspräferenz oder Angaben zur Bestimmung des zugeordneten Kontos zusammen mit den Kommunikationskosten unmittelbar nach der Beendung der Telefonverbindung von der betreffenden Vermittlungsstelle zur Verrechnung an eine Verrechnungseinheit übertragen.

Die notwendige erneute Eingabe der Kontonummer, respektive der Verrechnungspräferenz, wird von den Teilnehmern oft als mühsam und umständlich erachtet und kann zudem bei Fehleingaben oder Verwechslungen zu inkorrekten Verrechnungen führen. Zudem besteht bei den bekannten Systemen für die Teilnehmer nach der Angabe eines Kontos und der darauf folgenden entsprechenden automatischen Verrechnung der Kommunikationskosten keine Möglichkeit, Änderungen an der Kostenzuweisung vorzunehmen. In den bekannten Systemen ist es auch nicht möglich, dass ein Konto durch einen berechtigten zweiten Teilnehmer angegeben wird, der nicht an der betreffenden Verbindung beteiligt ist.

### Darstellung der Erfindung

Es ist eine Aufgabe der vorliegenden Erfindung, ein neues computerbasiertes System und ein neues Verfahren zum Verrechnen von Kommunikationskosten von Teilnehmern in einem Kommunikationsnetz vorzuschlagen, welche nicht die Nachteile des Stands der Technik aufweisen und welche insbesondere ermöglichen, die Kommunikationskosten eines Teilnehmers verschiedenen Konti zuzuweisen und automatisch den zugewiesenen Konti zu verrechnen, wobei die Kostenzuweisung auch nach der Entstehung der Kommunikationskosten geändert werden kann.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Zum Verrechnen von Kommunikationskosten eines Teilnehmers in einem Kommunikationsnetz werden Kostenbelege mit Kommunikationskosten des Teilnehmers an ein computerbasiertes System übermittelt. Zur Identifizierung des Kontos, dem die Kommunikationskosten zu verrechnen sind, werden Verrechnungsinstruktionen, die diesbezügliche Angaben umfassen, an das computerbasierte System übermittelt.

Die oben genannten Ziele werden durch die vorliegende Erfindung insbesondere dadurch erreicht, dass entgegengenommene Verrechnungsinstruktionen im computerbasierten System in einer Instruktionsdatenbank, jeweils zugeordnet zu einer Identifizierung des Teilnehmers und zugeordnet zu einer ersten Zeitangabe, d.h. eine Instruktionszeitangabe, gespeichert werden. Die Instruktionszeitangabe wird beispielsweise durch das computerbasierte System, jeweils auf Grund des Zeitpunkts der Übermittlung, respektive des Empfangs der Verrechnungsinstruktionen, bestimmt. Entgegengenommene Kostenbelege mit Kommunikationskosten des Teilnehmers werden im computerbasierten System jeweils einschliesslich einer im Kostenbeleg enthaltenen zweiten Zeitangabe, d.h. eine Kostenzeitangabe, zugeordnet zu der Identifizierung des Teilnehmers gespeichert. Die Kostenzeitangabe betrifft vorzugsweise den Zeitpunkt der Entstehung der betreffenden Kommunikationskosten, insbesondere den Startzeitpunkt des betreffenden kostenpflichtigen Dienstes. Die gespeicherten Kostenbelege, die der Identifizierung des Teilnehmers zugeordnet sind, werden den gespeicherten Verrechnungsinstruktionen, die der Identifizierung des Teilnehmers zugeordnet sind, jeweils auf Grund der zugeordneten Instruktionszeitangabe und der im gespeicherten Kostenbeleg enthaltenen Kostenzeitangabe zugeordnet. Dadurch wird ermöglicht, dass die in einem Kostenbeleg enthaltenen Kommunikationskosten des Teilnehmers auf ein Konto verrechnet werden können, das durch die dem Kostenbeleg zugeordneten Verrechnungsinstruktionen bestimmt ist.

Durch die Speicherung der Verrechnungsinstruktionen in einer Instruktionsdatenbank ist es möglich, dass die Teilnehmer dem computerbasierten System unabhängig vom Zeitpunkt der Entstehung der Kommunikationskosten respektive unabhängig von der Inanspruchnahme von Kommunikationsdiensten Instruktionen für die Kostenzuweisungen auf verschiedene Konti geben können. Die Instruktionen für die Kostenzuweisungen können von den Teilnehmern dem computerbasierten System vor oder nach der Entstehung der Kommunikationskosten gegeben werden. Insbesondere wird auch ermöglicht, dass Verrechnungsinstruktionen für die Zuweisung der Kommunikationskosten eines ersten Teilnehmers durch einen zweiten Teilnehmer an das computerbasierte System übermittelt werden können. Durch die Zuordnung von Zeitangaben zu den Verrechnungsinstruktionen und zu den Kostenbelegen kann die Verrechnung der Kommunikationskosten entsprechend der durch die Verrechnungsinstruktionen definierten Kostenzuweisung zu einem Zeitpunkt durchgeführt werden, der nicht unmittelbar nach der Entstehung der Kommunikationskosten, sondern eine längere Zeitdauer danach, angesetzt ist, beispielsweise Stunden, Tage oder Wochen nach der Beendung eines Telefongesprächs, beispielsweise jeden Abend, am Wochenende oder an einem bestimmten Tag jeden Monats. Im Zeitraum vom Zeitpunkt der Entstehung der Kommunikationskosten bis zum Zeitpunkt der Verrechnung der Kommunikationskosten ist es folglich für berechtigte Teilnehmer auch möglich, Änderungen und Korrekturen an den gespeicherten Verrechnungsinstruktionen vorzunehmen.

In einer bevorzugten Ausführungsvariante wird die Zuordnung der gespeicherten Kostenbelege zu den gespeicherten Verrechnungsinstruktionen jeweils durch das computerbasierte System auf Grund der zugeordneten Instruktionszeitangabe und Kostenzeitangabe und auf Grund eines den Verrechnungsinstruktionen zugeordneten Instruktionstyps vorgenommen. Verrechnungsinstruktionen mit einem Instruktionstyp "Umschatten" können beispielsweise dazu verwendet werden, sämtliche Kommunikationskosten ab dem Zeitpunkt der Übermittlung der Verrechnungsinstruktionen einem angegebenen Konto zu verrechnen, bis eine neue Verrechnungsinstruktion mit dem Instruktionstyp "Umschalten" aktiv wird. Verrechnungsinstruktionen mit einem Instruktionstyp "Einmal" können beispielsweise dazu verwendet werden, die Kommunikationskosten für die Inanspruchnahme eines Dienstes unmittelbar vor oder nach dem Zeitpunkt der Übermittlung der Verrechnungsinstruktionen einem angegebenen Konto zu verrechnen.

In einer Ausführungsvariante wird eine der in der Instruktionsdatenbank gespeicherten Verrechnungsinstruktionen und/oder die zugeordnete Instruktionszeitangabe von einem berechtigten Teilnehmer über ein Kommunikationsnetz verändert. Wie bereits erwähnt, können so Änderungen und Korrekturen an den gespeicherten Verrechnungsinstruktionen vorgenommen werden, beispielsweise mittels eines Kommunkiationssendegeräts über das Internet.

In einer Ausführungsvariante werden die Verrechnungsinstruktionen und die Kostenbelege mit Kommunikationskosten jeweils einer ersten Teilnehmeridentifizierung zugeordnet, mindestens einer der Verrechnungsinstruktionen wird vor deren Übermittlung eine zweite Teilnehmeridentifizierung eingefügt, und die Berechtigung der zweiten Teilnehmeridentifizierung wird überprüft, bevor die mindestens eine Verrechnungsinstruktion in der Instruktionsdatenbank der ersten Teilnehmeridentifizierung zugeordnet gespeichert wird. Wie bereits erwähnt ist es so möglich, dass Verrechnungsinstruktionen für die Zuweisung der Kommunikationskosten eines ersten Teilnehmers durch einen zweiten Teilnehmer an das computerbasierte System übermittelt werden können, wobei die diesbezügliche Berechtigung des durch die zweite Teilnehmeridentifizierung bestimmten zweiten Teilnehmers überprüft wird.

Das computerbasierte System zum Verrechnen der Kommunikationskosten eines Teilnehmers in einem Kommunikationsnetz umfasst eine computerbasierte Verrechnungseinheit, die eingerichtet ist, Kostenbelege mit Kommunikationskosten des Teilnehmers entgegenzunehmen und die eingerichtet ist, Verrechnungsinstruktionen mit Angaben zur Identifizierung eines Kontos, dem die Kommunikationskosten zu verrechnen sind, entgegenzunehmen. Um die oben genannten Ziele zu erreichen, umfasst das computerbasierte System insbesondere Mittel zum Entgegennehmen von Verrechnungsinstruktionen, die Angaben zur Identifizierung des Kontos umfassen, eine Instruktionsdatenbank zum Speichern der entgegengenommenen Verrechnungsinstruktionen, jeweils zugeordnet zu der Identifizierung des Teilnehmers und zugeordnet zu der Instruktionszeitangabe, Mittel zum Speichern der übermittelten Kostenbelege mit Kommunikationskosten des Teilnehmers in der Verrechnungseinheit, jeweils zugeordnet zu der Identifizierung des Teilnehmers und zugeordnet zu der Kostenzeitangabe, Mittel zum Zuordnen der gespeicherten Kostenbelege, die der Identifizierung des Teilnehmers zugeordnet sind, zu den gespeicherten Verrechnungsinstruktionen, die der Identifizierung des Teilnehmers zugeordnet sind, auf Grund der zugeordneten Instruktionszeitangabe und Kostenzeitangabe, um die in einem Kostenbeleg enthaltenen Kommunikationskosten des Teilnehmers auf ein Konto, das durch die dem Kostenbeleg zugeordneten Verrechnungsinstruktionen bestimmt ist, zu verrechnen.

Die verschiedenen obenstehend genannten Mittel sind vorzugsweise als programmierte Softwaremodule ausgeführt, insbesondere als Computerprogrammcodemittel zur Steuerung eines oder mehrerer Prozessoren eines computerbasierten Systems. Der Fachmann wird verstehen, dass die obenstehend genannten Mittel auch teilweise oder vollständig mittels Hardware ausgeführt werden können.

Die vorliegende Erfindung betrifft auch ein Computerprogrammprodukt, das ein computerlesbares Medium umfasst, worin die Computerprogrammcodemittel zur Steuerung des oder der Prozessoren des computerbasierten Systems enthalten sind.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:
Figur 1 zeigt ein Blockdiagramm, welches schematisch ein computerbasiertes System zum Verrechnen von Kommunikationskosten in einem Kommunikationsnetz darstellt, das mit dem Kommunikationsnetz verbunden ist und über dieses Kommunikationsnetz mit Kommunkiationssendegeräten kommunizieren kann.
Figur 2 zeigt eine Zeitachse, auf der Zeitintervalle dargestellt sind, die durch Verrechnungsinstruktionen eines Teilnehmers definiert sind.

### Wege zur Ausführung der Erfindung

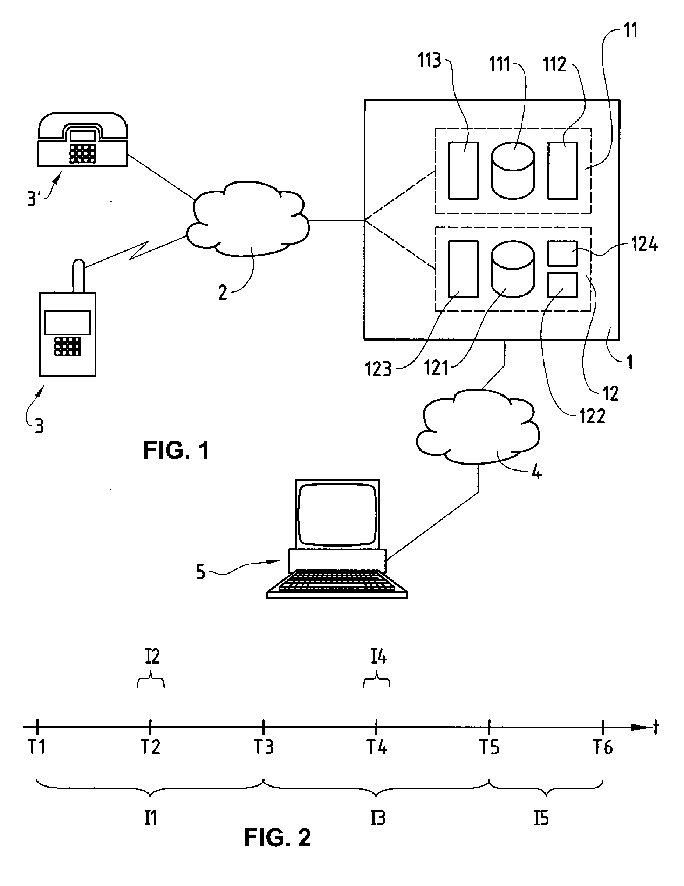

In der Figur 1 bezieht sich das Bezugszeichen 2 auf ein Kommunikationsnetz, welches vorzugsweise ein Mobilfunknetz umfasst, beispielsweise ein GSM- (Global System for Mobile Communication) oder UMTS-Netz (Universal Mobile Telephone System) oder ein anderes, beispielsweise satellitenbasiertes Mobilfunknetz, oder ein WLAN (Wireless Local Area Network). Das Kommunikationsnetz 2 umfasst auch ein Festnetz, insbesondere das öffentliche geschaltete Telefonnetz, ein ISDN-Netz (Integrated Services Digital Network) und das Internet.

Die Bezugszeichen 3 und 3' beziehen sich auf Kommunkiationssendegeräte für die Kommunikation über das Kommunikationsnetz 2. Das Bezugszeichen 3 bezieht sich auf ein mobiles Kommunkiationssendegerät, beispielsweise ein Mobilfunktelefon oder einen Laptop- oder PDA-Computer (Personal Digital Assistant) mit einem Mobilfunkkommunikationsmodul. Das Bezugszeichen 3' bezieht sich auf ein festes Kommunkiationssendegerät, beispielsweise ein festes Telefon oder einen PC (Personal Computer) mit einem Modem oder mit einem ISDN-Kommunikationsmodul.

In der Figur 1 bezieht sich das Bezugszeichen 4 auf ein Kommunikationsnetz, welches vorzugsweise ein Festnetz umfasst, beispielsweise das öffentlich geschaltete Telefonnetz, ein ISDN-Netz (Integrated Services Digital Network) oder das Internet. Das Kommunikationsnetz 4 umfasst auch ein Mobilfunknetz.

Das Bezugszeichen 5 bezieht sich auf Kommunkiationssendegeräte für die Kommunikation über das Kommunikationsnetz 4.

Das Bezugszeichen 1 bezieht sich auf ein computerbasiertes System zum Verrechnen von Kommunikationskosten von Teilnehmern im Kommunikationsnetz 2. Die Kommunikationskosten umfassen vorzugsweise Kosten für Kommunikationsverbindungen, insbesondere Telefongespräche, aber auch für andere kostenpflichtige Kommunikationsdienste, Datendienste oder Mehrwertdienste mit zeitdauerbasierter oder datenvolumenbasierter Verrechnung, die von den Teilnehmern mittels der Kommunkiationssendegeräte 3, 3' über das Kommunikationsnetz 2 benützt werden.

Das computerbasierte System 1 umfasst eine Verrechnungseinheit 11, die auf einem oder mehreren Computern ausgeführt ist. Die Verrechnungseinheit 11 kann ohne Modifikationen auf herkömmliche Weise ausgeführt sein und umfasst typischerweise ein Empfangsmodul 113, eine Kostendatenbank 111 und ein Verrechnungsmodul 112. Das Empfangsmodul 113 ist eingerichtet, vom Kommunikationsnetz 2 Kostenbelege zu empfangen, die Angaben über Kommunikationskosten eines Teilnehmers umfassen, beispielsweise so genannte CDR- (Call Detail Records) oder TAP-Belege (Transferred Account Procedure). Die Kostendatenbank 111 umfasst Datenspeicher zur Speicherung von empfangenen Kostenbelegen.

Das computerbasierte System 1 umfasst zudem eine Instruktionsdatenbank 121, ein Schnittstellenmodul 122, ein Konfigurationsmodul 123 und ein Kostenzuweisungsmodul 124. Wie in der Figur 1 schematisch dargestellt ist, sind die Instruktionsdatenbank 121, das Schnittstellenmodul 122, das Konfigurationsmodul 123 sowie das Kostenzuweisungsmodul 124 vorzugsweise auf einem gemeinsamen Computer 12 ausgeführt, der mit der Verrechnungseinheit 11 verbunden ist. Die Verrechnungseinheit 11 kann in einer Ausführungsvariante auch auf dem Computer 12 ausgeführt werden. Das Konfigurationsmodul 123 ist eingerichtet, zur Zugangskontrolle ein Teilnehmerlogin durchzuführen und von den Kommunkiationssendegeräten 3, 3' Verrechnungsinstruktionen über das Kommunikationsnetz 2 zu empfangen, die Angaben zur Identifizierung des Kontos umfassen, dem die Kommunikationskosten eines Teilnehmers zu verrechnen sind, vorzugsweise mittels Datenmeldungen. Die Instruktionsdatenbank 121 umfasst Datenspeicher zur Speicherung von empfangenen Verrechnungsinstruktionen.

Das Verrechnungsmodul 112, das Empfangsmodul 113, das Konfigurationsmodul 123, das Schnittstellenmodul 122, das Kostenzuweisungsmodul 124 sowie die Kostendatenbank 111 und die Instruktionsdatenbank 121 sind vorzugsweise als programmierte Softwaremodule ausgeführt. Der Fachmann wird verstehen, dass die funktionalen Module auch vollständig oder teilweise hardwaremässig ausgeführt werden können.

Die Verrechnungsinstruktionen eines Teilnehmers werden von den Kommunkiationssendegeräten 3, 3' in Form von gesprochener Sprache oder Signaltönen, aber vorzugsweise als Datenmeldungen über das Kommunikationsnetz 2 an das computerbasierte System 1 übermittelt. Die Datenmeldungen sind beispielsweise USSD-Meldungen (Unstructured Supplementary Service Data) oder SMS-Meldungen (Short Messaging System) die an das computerbasierte System 1, respektive an die Instruktionsdatenbank 121, adressiert sind. Sowohl USSD- als auch SMS-Meldungen können international verwendet werden, da sie auch beim Roaming in besuchten Netzen automatisch an das Heimnetz geleitet werden. Die Datenmeldungen werden beispielsweise automatisch über ein HLR (Home Location Register) und einen USSD-Gateway im Kommunikationsnetz 2 an das computerbasierte System 1, respektive an die Instruktionsdatenbank 121, geleitet. Die in den Datenmeldungen enthaltenen Verrechnungsinstruktionen umfassen Angaben zur Identifizierung eines Kontos. Den Verrechnungsinstruktionen wird zudem jeweils ein Instruktionstyp zugeordnet.

In der Tabelle 1 wird ein Beispiel von Datenmeldungen mit Verrechnungsinstruktionen in Form von USSD-Meldungen gezeigt. Durch einen vom Teilnehmer eingegeben Präfix "*123*" der USSD-Meldung wird die Datenmeldung als Verrechnungsinstruktion identifiziert und die Instruktionsdatenbank 121, respektive das computerbasierte System 1, adressiert. Wie in der Tabelle 1 dargestellt wird, folgt auf den Präfix die eigentliche Verrechnungsinstruktion mit den Angaben zur Identifizierung des Kontos (Privatkonto oder Geschäftskonto), dem die Kommunikationskosten zu verrechnen sind, in Form einer einzelnen, vom Teilnehmer eingegeben Zahlenziffer "1", "2", "3" oder "4". Auf Grund des Werts dieser letztgenannten Zahlenziffer kann der Verrechnungsinstruktion zudem ein Instruktionstyp ("Einmal" oder "Umschalten") zugeordnet werden. Dieses Prinzip kann natürlich auch zur Bestimmung von mehr als zwei Konti und zur Zuordnung von mehr als zwei Instruktionstypen erweitert werden. Zur einfacheren Eingabe können die in der Tabelle 1 gezeigten USSD-Meldungen auch auf dem Kommunkiationssendegerät 3 gespeichert und definierten Tasten zugewiesen werden. Dadurch wird ermöglicht, dass Kostenzuweisungen zwischen verschiedenen Konti mittels einfachen Tastendrucks umgeschaltet werden können, ohne dass dazu Hardwareänderungen an den Kommunkiationssendegeräten 3 vorgenommen werden müssen.

**Tabelle 1**

| Verrechnungsinstruktion | Konto | Instruktionstyp |
|---|---|---|
| *123*1 # | Privatkonto | Einmal |
| *123*2# | Geschäftskonto | Einmal |
| *123*3# | Privatkonto | Umschalten |
| *123*4# | Geschäftskonto | Umschalten |

Bei der Übermittlung der eingegebenen USSD-Meldung wird vom Kommunkiationssendegerät 3 automatisch die Teilnehmeridentifizierung des betreffenden Teilnehmers in die USSD-Meldung eingefügt, beispielsweise eine so genannte IMSI (International Mobile Subscriber Identity), die in einem Identifizierungsmodul (Subscriber Identity Module, SIM) des Kommunkiationssendegeräts 3 gespeichert ist. Um einem ersten Teilnehmer zu ermöglichen, Verrechnungsinstruktionen für die Kostenzuweisung eines anderen zweiten Teilnehmers an das computerbasierte System 1 zu übermitteln, kann vom ersten Teilnehmer zusätzlich eine Teilnehmeridentifizierung des anderen zweiten Teilnehmers in die Datenmeldung eingefügt werden. Diese zusätzliche Teilnehmeridentifizierung ist vorzugsweise die Rufnummer, beispielsweise eine so genannte MSISDN-Nummer (Mobile Subscriber ISDN), des anderen zweiten Teilnehmers. Die zusätzliche Teilnehmeridentifizierung kann auch in der Form eines so genannten Alias als teilnehmerspezifisch definierter Code angegeben werden.

Beim Empfang einer Datenmeldung mit einer Verrechnungsinstruktion prüft das Konfigurationsmodul 123, ob der empfangenen Datenmeldung eine zusätzliche Teilnehmeridentifizierung eines anderen zweiten Teilnehmers eingefügt wurde. Gegebenenfalls überprüft das Konfigurationsmodul 123, ob der Teilnehmer, der durch die automatisch in die Datenmeldung eingefügte Teilnehmeridentifizierung bestimmt ist, berechtigt ist, Verrechnungsinstruktionen für den anderen zweiten Teilnehmer zu übermitteln. Für diesen Zweck ist im computerbasierten System 1 beispielsweise eine nicht dargestellte Berechtigungstabelle gespeichert, in welcher Identifizierungen von Teilnehmern, die zur Übermittlung von Verrechnungsinstruktionen für einen anderen Teilnehmer berechtigt sind, einer Identifizierung des anderen Teilnehmers zugeordnet sind. Falls keine Berechtigung vorliegt, weil beispielsweise kein entsprechender Eintrag in der Berechtigungstabelle gefunden wird, wird die Verrechnungsinstruktion nicht gespeichert. Falls eine Berechtigung vorliegt oder falls in der empfangenen Datenmeldung keine zusätzliche Teilnehmeridentifizierung eingefügt wurde, speichert das Konfigurationsmodul 123 die in den empfangenen Datenmeldungen enthaltenen Verrechnungsinstruktionen, respektive Angaben, die diesen Verrechnungsinstruktionen entsprechen, im Datenspeicher der Instruktionsdatenbank 121. Die Verrechnungsinstruktionen, respektive die entsprechenden Angaben, werden jeweils der Identifizierung des Teilnehmers zugeordnet gespeichert, für den die Kostenzuweisung vorgenommen werden soll, das heisst, gegebenenfalls der zusätzlich eingefügten Teilnehmeridentifizierung des anderen zweiten Teilnehmers oder andernfalls der automatisch eingefügten Teilnehmeridentifizierung. Das Konfigurationsmodul 123 bestimmt zudem den Zeitpunkt der Übermittlung respektive des Empfangs der Datenmeldung mit der Verrechnungsinstruktion und speichert eine entsprechende Zeitangabe (Instruktionszeitangabe) zugeordnet zu der Verrechnungsinstruktion.

**Tabelle 2**

| Teilnehmeridentifizierung(en) | Verrechnungsinstruktion | Entsprechende Angaben / Bedeutung | Instruktionszeitangabe (Datum / Zeit) |
|---|---|---|---|
| MSISDN: +41791234567 IMSI: 228011234567890 | 4 | Geschäftskonto ab | 03-09-02 / 08:13 (T1) |
| | 1 | Privatkonto einmal um | 03-09-02 / 11:42 (T2) |
| | 3 | Privatkonto ab | 03-09-02 / 17:05 (T3) |
| | 2 | Geschäftskonto einmal um | 03-09-02 / 20:27 (T4) |
| | 4 | Geschäftskonto ab | 03-09-03 / 07:58 (T5) |
| | 3 | Privatkonto ab | 03-09-02 / 17:19 (T6) |

In der Tabelle 2 ist ein Beispiel mehrerer Verrechnungsinstruktionen dargestellt, die sequentiell für einen bestimmten Teilnehmer in der Instruktionsdatenbank 121 gespeichert wurden, wobei für jeden Eintrag für den Teilnehmer ein weiterer zusätzlicher Datensatz im Datenspeicher 121 gespeichert wird.

Das Schnittstellenmodul 122 ist eingerichtet, einem berechtigten Benutzer zu ermöglichen, mit dem Kommunkiationssendegerät 5 über das Kommunikationsnetz 4 auf die Instruktionsdatenbank 121 zuzugreifen und die dort gespeicherten Verrechnungsinstruktionen, respektive die entsprechenden Angaben, sowie die zugeordneten Zeitangaben zu ändern, neue Verrechnungsinstruktionen einzufügen oder bestehende Verrechnungsinstruktionen zu löschen.

Das Empfangsmodul 113 der Verrechnungseinheit 11 speichert vom Kommunikationsnetz 2 empfangene Kostenbelege in der Kostendatenbank 111, zugeordnet zu einer Identifizierung des Teilnehmers. Neben den Angaben über Kommunikationskosten eines Teilnehmers umfassen die Kostenbelege jeweils auch eine Zeitangabe über den Zeitpunkt der Entstehung der Kommunikationskosten, d.h. eine Kostenzeitangabe, beispielsweise der Zeitpunkt eines Telefongesprächs, insbesondere über den Startzeitpunkt der Entstehung der Kommunikationskosten, beispielsweise der Startzeitpunkt einer Telefonverbindung.

Die Funktionen des Verrechnungsmoduls 112 werden unabhängig vom Zeitpunkt der Übermittlung der Verrechnungsinstruktionen und unabhängig vom Zeitpunkt der Entstehung der Kommunikationskosten ausgeführt. Die Funktionen des Verrechnungsmoduls 112 werden beispielsweise periodisch jeden Abend, jede Woche oder jeden Monat ausgeführt.

Vor dem Ausführungszeitpunkt der Verrechnung durch das Verrechnungsmodul 112 ordnet das Kostenzuweisungsmodul 124 die in der Kostendatenbank 111 gespeicherten Kostenbelege eines Teilnehmers den in der Instruktionsdatenbank 121 gespeicherten Verrechnungsinstruktionen dieses Teilnehmers zu. Anders ausgedrückt werden die gespeicherten Verrechnungsinstruktionen eines Teilnehmers durch das Kostenzuweisungsmodul 124 den gespeicherten Kostenbelegen dieses Teilnehmers zugeordnet. Die Zuordnung der gespeicherten Kostenbelege zu den gespeicherten Verrechnungsinstruktionen, respektive umgekehrt, wird durch das Kostenzuweisungsmodul 124 auf Grund der Zeitangaben ausgeführt, die den Verrechnungsinstruktionen zugeordnet sind und die in den Kostenbelegen enthalten sind. Um einem berechtigten Teilnehmer letzte Änderungen und Korrekturen an den gespeicherten Verrechnungsinstruktionen über das Schnittstellenmodul 122 zu ermöglichen, kann dem Teilnehmer optional vor der Ausführung der Kostenzuweisung eine Meldung übermittelt werden, beispielsweise eine SMS-Meldung, in welcher auf den letztmöglichen Zeitpunkt von Korrekturen vor der Durchführung der Kostenzuweisung und der Verrechung aufmerksam gemacht wird. An dieser Stelle soll auch erwähnt werden, dass der berechtigte Teilnehmer jederzeit eine Instruktionsmeldung an die Instruktionsdatenbank 121 übermitteln kann, um weitere Änderungen an seinen gespeicherten Verrechnungsinstruktionen sperren zu lassen.

Schliesslich verrechnet das Verrechnungsmodul 112, die in einem Kostenbeleg angegebenen Kommunikationskosten eines Teilnehmers jeweils auf das Konto, das durch die dem Kostenbeleg zugeordneten Verrechnungsinstruktionen bestimmt ist. Das Konto kann ein Pre-Paid oder Post-Paid Konto sein.

In der Figur 2 sind auf einer Zeitachse t beispielhaft die Zeitintervalle I1 bis I6 dargestellt, die durch die in der Tabelle 2 angegebenen Verrechnungsinstruktionen definiert werden. Das Zeitintervall I1 wird durch die Verrechnungsinstruktionen vom Instruktionstyp "Umschalten" mit den Instruktionszeitangaben T1 und T3 bestimmt. Das Zeitintervall I1 = [T1, T3) umfasst die Intervallsgrenze T1, schliesst die Intervallsgrenze T3 jedoch nicht ein. Das Zeitintervall I2 = [T2-Δt, T2+Δt] wird durch die Verrechnungsinstruktion vom Instruktionstyp "Einmal" mit der Instruktionszeitangabe T2 definiert. Ein Kostenbeleg mit einer Kostenzeitangabe im Zeitintervall l2 wird der entsprechenden Verrechnungsinstruktion mit der Instruktionszeitangabe T2 zugeordnet. Falls mehrere Kostenbelege Kostenzeitangaben im Zeitintervall I2 aufweisen, wird nur der Kostenbeleg dem Zeitintervall I2 zugeordnet, der dem Zeitpunkt T2 am nächsten liegt. Die Zeitdauer Δt wird so gewählt, dass dem Teilnehmer genügend Zeit bleibt, das Konto kurz vor oder nach der Entstehung der Kommunikationskosten anzugeben, beispielsweise unmittelbar vor oder nach einem Telefongespräch. Andererseits soll durch die Zeitdauer Δt verhindert werden, dass Kommunikationskosten irrtümlich auf ein falsches Konto verrechnet werden, wenn der Teilnehmer beispielsweise verhindert wird, nach der Eingabe einer Verrechnungsinstruktion mit dem Instruktionstyp "Einmal" Kommunikationsdienste in Anspruch zu nehmen. Die Zeitdauer Δt beträgt beispielsweise 5 bis 15 Sekunden. Alle Kostenbelege mit Kostenzeitangaben im Zeitintervall I1, die nicht dem Zeitintervall I2 zugeordnet wurden, werden der entsprechenden Verrechnungsinstruktion mit der Instruktionszeitangabe T1 zugeordnet. In gleicher Weise werden die Kostenbelege mit Kostenzeitangaben in den Zeitintervallen I3 = [T3, T5), I4 = [T4-Δt, T4+Δt] und I5 = [T5, T6) den entsprechenden Verrechnungsinstruktionen zugeordnet.

## Patentansprüche

1. Computerbasiertes System (1) zum Verrechnen von Kommunikationskosten eines Teilnehmers in einem Kommunikationsnetz (2), umfassend eine computerbasierte Verrechnungseinheit (11), die eingerichtet ist, Kostenbelege entgegenzunehmen, die Angaben über Kommunikationskosten des Teilnehmers umfassen, sowie Mittel zum Entgegennehmen von Verrechnungsinstruktionen, die Angaben zur Identifizierung eines Kontos umfassen, dem die Kommunikationskosten zu verrechnen sind, **gekennzeichnet durch**
eine Instruktionsdatenbank (121) zum Speichern der entgegengenommenen Verrechnungsinstruktionen, jeweils zugeordnet zu einer Identifizierung des Teilnehmers und zugeordnet zu einer ersten Zeitangabe,
Mittel zum Speichern der übermittelten Kostenbelege in der Verrechnungseinheit (11), jeweils zugeordnet zu der Identifizierung des Teilnehmers, und
Mittel zum Zuordnen der gespeicherten Kostenbelege, die der Identifizierung des Teilnehmers zugeordnet sind, zu den gespeicherten Verrechnungsinstruktionen, die der Identifizierung des Teilnehmers zugeordnet sind, auf Grund der zugeordneten ersten Zeitangabe und einer in den gespeicherten Kostenbelegen enthaltenen zweiten Zeitangabe, um die in einem Kostenbeleg angegebenen Kommunikationskosten des Teilnehmers auf ein Konto, das **durch** die dem Kostenbeleg zugeordneten Verrechnungsinstruktionen bestimmt ist, zu verrechnen.

2. System (1) nach Anspruch 1, **dadurch gekennzeichnet, dass** die Mittel zum Zuordnen der gespeicherten Kostenbelege zu den gespeicherten Verrechnungsinstruktionen eingerichtet sind, die Zuordnung jeweils auf Grund der zugeordneten ersten und zweiten Zeitangaben und auf Grund eines den Verrechnungsinstruktionen zugeordneten Instruktionstyps vorzunehmen.

3. System (1) nach einem der Ansprüche 1 oder 2, **dadurch gekennzeichnet, dass** das System (1) ein Schnittstellenmodul (122) umfasst, über welches eine der in der Instruktionsdatenbank (121) gespeicherten Verrechnungsinstruktionen und/oder die zugeordnete erste Zeitangabe von einem berechtigten Teilnehmer über ein Kommunikationsnetz (4) veränderbar sind.

4. System (1) nach einem der Ansprüche 1 bis 3, **dadurch gekennzeichnet, dass** die Verrechnungsinstruktionen und die Kostenbelege jeweils einer ersten Teilnehmeridentifizierung zugeordnet sind, dass mindestens eine der Verrechnungsinstruktionen eine zweite Teilnehmeridentifizierung umfasst, und dass das System (1) Mittel umfasst, um die Berechtigung der zweiten Teilnehmeridentifizierung zu überprüfen, bevor die mindestens eine Verrechnungsinstruktion in der Instruktionsdatenbank (121) der ersten Teilnehmeridentifizierung zugeordnet gespeichert wird.

5. System (1) nach einem der Ansprüche 1 bis 4, **dadurch gekennzeichnet, dass** die Mittel zum Entgegennehmen der Verrechnungsinstruktionen eingerichtet sind die Verrechnungsinstruktionen in Datenmeldungen von einem Kommunkiationssendegerät (3) des Teilnehmers über ein Mobilfunknetz entgegenzunehmen, dass das System (1) Mittel umfasst, um die erste Zeitangabe jeweils auf Grund des Zeitpunkts der Übermittlung der Verrechnungsinstruktionen zu bestimmen, dass die zweite Zeitangabe jeweils den Zeitpunkt der Entstehung der Kommunikationskosten betrifft, und dass die Mittel zum Zuordnen der gespeicherten Kostenbelege mit Kommunikationskosten des Teilnehmers zu den gespeicherten Verrechnungsinstruktionen in der Verrechnungseinheit (11) ausgeführt sind.

6. Verfahren zum Verrechnen von Kommunikationskosten eines Teilnehmers in einem Kommunikationsnetz (2), in welchem Verfahren Kostenbelege, die Angaben über Kommunikationskosten des Teilnehmers umfassen, an ein computerbasiertes System (1) übermittelt werden, und in welchem Verfahren Verrechnungsinstruktionen, die Angaben zur Identifizierung eines Kontos umfassen, dem die Kommunikationskosten zu verrechnen sind, an das computerbasierte System (1) übermittelt werden, **gekennzeichnet durch**
Speichern der übermittelten Verrechnungsinstruktionen in einer Instruktionsdatenbank (121), jeweils zugeordnet zu einer Identifizierung des Teilnehmers und zugeordnet zu einer ersten Zeitangabe,
Speichern der übermittelten Kostenbelege im computerbasierten System (1), jeweils zugeordnet zu der Identifizierung des Teilnehmers,
Zuordnen der gespeicherten Kostenbelege, die der Identifizierung des Teilnehmers zugeordnet sind, zu den gespeicherten Verrechnungsinstruktionen, die der Identifizierung des Teilnehmers zugeordnet sind, jeweils auf Grund der zugeordneten ersten Zeitangabe und einer in den gespeicherten Kostenbelegen enthaltenen zweiten Zeitangabe, und
Verrechnen der in einem Kostenbeleg angegebenen Kommunikationskosten des Teilnehmers auf ein Konto, das **durch** die dem Kostenbeleg zugeordneten Verrechnungsinstruktionen bestimmt ist.

7. Verfahren nach Anspruch 6, **dadurch gekennzeichnet, dass** die Zuordnung der gespeicherten Kostenbelege zu den gespeicherten Verrechnungsinstruktionen jeweils auf Grund der zugeordneten ersten und zweiten Zeitangaben und auf Grund eines den Verrechnungsinstruktionen zugeordneten Instruktionstyps vorgenommen wird.

8. Verfahren nach einem der Ansprüche 6 oder 7, **dadurch gekennzeichnet, dass** eine der in der Instruktionsdatenbank (121) gespeicherten Verrechnungsinstruktionen und/oder die zugeordnete erste Zeitangabe von einem berechtigten Teilnehmer über ein Kommunikationsnetz (4) verändert werden.

9. Verfahren nach einem der Ansprüche 6 bis 8, **dadurch gekennzeichnet, dass** die Verrechnungsinstruktionen und die Kostenbelege jeweils einer ersten Teilnehmeridentifizierung zugeordnet werden, dass mindestens einer der Verrechnungsinstruktionen vor deren Übermittlung eine zweite Teilnehmeridentifizierung eingefügt wird, und dass die Berechtigung der beigefügten zweiten Teilnehmeridentifizierung überprüft wird, bevor die Verrechnungsinstruktion in der Instruktionsdatenbank (121) der ersten Teilnehmeridentifizierung zugeordnet gespeichert wird.

10. Verfahren nach einem der Ansprüche 6 bis 9, **dadurch gekennzeichnet, dass** die Verrechnungsinstruktionen von einem mobilen Kommunkiationssendegerät (3) des Teilnehmers mittels Datenmeldungen über ein Mobilfunknetz an die Instruktionsdatenbank (121) übermittelt werden, dass die erste Zeitangabe jeweils durch das computerbasierte System (1) auf Grund des Zeitpunkts der Übermittlung der Verrechnungsinstruktionen bestimmt wird, dass die zweite Zeitangabe jeweils den Zeitpunkt der Entstehung der Kommunikationskosten betrifft, und dass die Zuordnung der gespeicherten Kostenbelege zu den gespeicherten Verrechnungsinstruktionen sowie die Verrechnung der in einem Kostenbeleg enthaltenen Kommunikationskosten des Teilnehmers durch das computerbasierte System (1) durchgeführt werden.

11. Computerprogrammprodukt umfassend: ein computerlesbares Medium mit darin enthaltenen Computerprogrammcodemitteln zur Steuerung eines oder mehrerer Prozessoren eines computerbasierten Systems (1) zum Verrechnen von Kommunikationskosten eines Teilnehmers in einem Kommunikationsnetz (2), derart,
dass im computerbasierten System (1) eine oder mehrere Verrechnungsinstruktionen entgegengenommen werden, die Angaben zur Identifizierung eines Kontos umfassen, dem die Kommunikationskosten zu verrechnen sind,
dass die entgegengenommenen Verrechnungsinstruktionen im computerbasierten System (1) in einer Instruktionsdatenbank (121) jeweils zugeordnet zu einer Identifizierung des Teilnehmers und zugeordnet zu einer ersten Zeitangabe gespeichert werden,
dass im computerbasierten System (1) Kostenbelege entgegengenommen werden, die Angaben über Kommunikationskosten des Teilnehmers umfassen,
dass die entgegengenommenen Kostenbelege im computerbasierten System (1), jeweils zugeordnet zu der Identifizierung des Teilnehmers, gespeichert werden, und
dass im computerbasierten System (1) jeweils auf Grund der zugeordneten ersten Zeitangabe und einer in den gespeicherten Kostenbelegen enthaltenen zweiten Zeitangabe die gespeicherten Kostenbelege, die der Identifizierung des Teilnehmers zugeordnet sind, den gespeicherten Verrechnungsinstruktionen, die der Identifizierung des Teilnehmers zugeordnet sind, zugeordnet werden, um die in einem Kostenbeleg enthaltenen Kommunikationskosten des Teilnehmers auf ein Konto zu verrechnen, das durch die dem Kostenbeleg zugeordneten Verrechnungsinstruktionen bestimmt ist.

12. Das Computerprogrammprodukt gemäss Anspruch 11, **dadurch gekennzeichnet, dass** es weitere Computerprogrammcodemittel umfasst, die die Prozessoren des computerbasierten Systems (1) derart steuern, dass die Zuordnung der gespeicherten Kostenbelege zu den gespeicherten Verrechnungsinstruktionen im computerbasierten System (1), jeweils auf Grund der zugeordneten ersten und zweiten Zeitangaben und auf Grund eines den Verrechnungsinstruktionen zugeordneten Instruktionstyps, vorgenommen wird.

13. Das Computerprogrammprodukt gemäss einem der Ansprüche 11 oder 12, **dadurch gekennzeichnet, dass** es weitere Computerprogrammcodemittel umfasst, die die Prozessoren des computerbasierten Systems (1) derart steuern, dass eine der im computerbasierten System (1) in einer Instruktionsdatenbank (121) gespeicherten Verrechnungsinstruktionen und/oder die zugeordnete erste Zeitangabe entsprechend Instruktionen, die im computerbasierten System (1) von einem berechtigten Teilnehmer über ein Kommunikationsnetz (4) entgegengenommen werden, verändert werden.

14. Das Computerprogrammprodukt gemäss einem der Ansprüche 11 bis 13, **dadurch gekennzeichnet, dass** es weitere Computerprogrammcodemittel umfasst, die die Prozessoren des computerbasierten Systems (1) derart steuern, dass im computerbasierten System (1) die Verrechnungsinstruktionen und die Kostenbelege jeweils einer ersten Teilnehmeridentifizierung zugeordnet werden, und dass im computerbasierten System (1) die Berechtigung einer zweiten Teilnehmeridentifizierung überprüft wird, welche mindestens einer der entgegengenommenen Verrechnungsinstruktionen entnommen wird, bevor die mindestens eine Verrechnungsinstruktion in der Instruktionsdatenbank (121) der ersten Teilnehmeridentifizierung zugeordnet gespeichert wird.

15. Das Computerprogrammprodukt gemäss einem der Ansprüche 11 bis 14, **dadurch gekennzeichnet, dass** es weitere Computerprogrammcodemittel umfasst, die die Prozessoren des computerbasierten Systems (1) derart steuern, dass die Verrechnungsinstruktionen im computerbasierten System (1) in Datenmeldungen über ein Mobilfunknetz entgegengenommen werden, und dass die erste Zeitangabe im computerbasierten System (1) jeweils auf Grund des Zeitpunkts der Übermittlung der Verrechnungsinstruktionen bestimmt wird.

## Geänderte Patentansprüche

### Geänderte Patentansprüche gemäss Regel 86(2) EPÜ.

**1.** Computerbasiertes System (1) zum Verrechnen von Kommunikationskosten eines Teilnehmers in einem Kommunikationsnetz (2), umfassend
eine computerbasierte Verrechnungseinheit (11), die eingerichtet ist, Kostenbelege entgegenzunehmen, die Angaben über Kommunikationskosten des Teilnehmers umfassen, sowie Mittel zum Entgegennehmen von Verrechnungsinstruktionen, die Angaben zur Identifizierung eines Kontos umfassen, dem die Kommunikationskosten zu verrechnen sind,
eine Instruktionsdatenbank (121) zum Speichern der entgegengenommenen Verrechnungsinstruktionen, jeweils zugeordnet zu einer Identifizierung des Teilnehmers und zugeordnet zu einer ersten Zeitangabe, und
Mittel zum Speichern der übermittelten Kostenbelege in der Verrechnungseinheit (11), jeweils zugeordnet zu der Identifizierung des Teilnehmers,
**gekennzeichnet durch** Mittel zum Zuordnen der gespeicherten Kostenbelege, die der Identifizierung des Teilnehmers zugeordnet sind, zu den gespeicherten Verrechnungsinstruktionen, die der Identifizierung des Teilnehmers zugeordnet sind, auf Grund der zugeordneten ersten Zeitangabe und einer in den gespeicherten Kostenbelegen enthaltenen zweiten Zeitangabe, um die in einem Kostenbeleg angegebenen Kommunikationskosten des Teilnehmers auf ein Konto, das **durch** die dem Kostenbeleg zugeordneten Verrechnungsinstruktionen bestimmt ist, zu verrechnen,
und **dadurch** gekennzeichnet, dass das System (1) Mittel umfasst, um die erste Zeitangabe jeweils auf Grund des Zeitpunkts der Übermittlung der Verrechnungsinstruktionen zu bestimmen, dass die zweite Zeitangabe jeweils den Zeitpunkt der Entstehung der Kommunikationskosten betrifft, und dass die Mittel zum Zuordnen der gespeicherten Kostenbelege mit Kommunikationskosten des Teilnehmers zu den gespeicherten Verrechnungsinstruktionen in der Verrechnungseinheit (11) ausgeführt sind.

**2.** System (1) nach Anspruch 1, **dadurch gekennzeichnet, dass** die Mittel zum Zuordnen der gespeicherten Kostenbelege zu den gespeicherten Verrechnungsinstruktionen eingerichtet sind, die Zuordnung jeweils auf Grund der zugeordneten ersten und zweiten Zeitangaben und auf Grund eines den Verrechnungsinstruktionen zugeordneten Instruktionstyps vorzunehmen.

**3.** System (1) nach einem der Ansprüche 1 und 2, **dadurch gekennzeichnet, dass** das System (1) ein Schnittstellenmodul (122) umfasst, über welches eine der in der Instruktionsdatenbank (121) gespeicherten Verrechnungsinstruktionen und/oder die zugeordnete erste Zeitangabe von einem berechtigten Teilnehmer über ein Kommunikationsnetz (4) veränderbar sind.

**4.** System (1) nach einem der Ansprüche 1 bis 3, **dadurch gekennzeichnet, dass** die Verrechnungsinstruktionen und die Kostenbelege jeweils einer ersten Teilnehmeridentifizierung zugeordnet sind, dass mindestens eine der Verrechnungsinstruktionen eine zweite Teilnehmeridentifizierung umfasst, und dass das System (1) Mittel umfasst, um die Berechtigung der zweiten Teilnehmeridentifizierung zu überprüfen, bevor die mindestens eine Verrechnungsinstruktion in der Instruktionsdatenbank (121) der ersten Teilnehmeridentifizierung zugeordnet gespeichert wird.

**5.** System (1) nach einem der Ansprüche 1 bis 4, **dadurch gekennzeichnet, dass** die Mittel zum Entgegennehmen der Verrechnungsinstruktionen eingerichtet sind, die Verrechnungsinstruktionen in Datenmeldungen von einem Kommunikationssendegerät (3) des Teilnehmers über ein Mobilfunknetz entgegenzunehmen.

**6.** Verfahren zum Verrechnen von Kommunikationskosten eines Teilnehmers in einem Kommunikationsnetz (2), in welchem Verfahren Kostenbelege mit Angaben über Kommunikationskosten des Teilnehmers an ein computerbasiertes System (1) übermittelt werden, und in welchem Verfahren Verrechnungsinstruktionen mit Angaben zur identifizierung eines Kontos, dem die Kommunikationskosten zu verrechnen sind, an das computerbasierte System (1) übermittelt werden, **gekennzeichnet durch**
Speichern der übermittelten Verrechnungsinstruktionen in einer Instruktionsdatenbank (121) des computerbasierten Systems (1), jeweils zugeordnet zu einer Identifizierung des Teilnehmers und zu einer ersten Zeitangabe,
Speichern der übermittelten Kostenbelege im computerbasierten System (1), jeweils zugeordnet zu der Identifizierung des Teilnehmers,
Zuordnen der gespeicherten Kostenbelege zu den gespeicherten Verrechnungsinstruktionen jeweils auf Grund der zugeordneten ersten Zeitangabe und zu einer in den gespeicherten Kostenbelegen enthaltenen zweiten Zeitangabe, und
Verrechnen der in einem Kostenbeleg angegebenen Kommunikationskosten des Teilnehmers auf ein Konto, das **durch** die dem Kostenbeleg zugeordneten Verrechnungsinstruktionen bestimmt ist,
wobei die Verrechnungsinstruktionen von einem Kommunikationssendegerät (3) des Teilnehmers mittels Datenmeldungen an die Instruktionsdatenbank (121) übermittelt werden, die erste Zeitangabe jeweils **durch** das computerbasierte System (1) auf Grund des Zeitpunkts der Übermittlung der Verrechnungsinstruktionen bestimmt wird, die zweite Zeitangabe jeweils den Zeitpunkt der Entstehung der Kommunikationskosten betrifft, und die Zuordnung der gespeicherten Kostenbelege zu den gespeicherten Verrechnungsinstruktionen sowie die Verrechnung der in einem Kostenbeleg enthaltenen Kommunikationskosten des Teilnehmers **durch** das computerbasierte System (1) durchgeführt werden.

**7.** Verfahren nach Anspruch 6, **dadurch gekennzeichnet, dass** die Zuordnung der gespeicherten Kostenbelege zu den gespeicherten Verrechnungsinstruktionen jeweils auf Grund der zugeordneten ersten und zweiten Zeitangaben und auf Grund eines den Verrechnungsinstruktionen zugeordneten Instruktionstyps vorgenommen wird.

**8.** Verfahren nach einem der Ansprüche 6 und 7, **dadurch gekennzeichnet, dass** eine der in der Instruktionsdatenbank (121) gespeicherten Verrechnungsinstruktionen und/oder die zugeordnete erste Zeitangabe von einem berechtigten Teilnehmer über ein Kommunikationsnetz (4) verändert werden.

**9.** Verfahren nach einem der Ansprüche 6 bis 8, **dadurch gekennzeichnet, dass** die Verrechnungsinstruktionen und die Kostenbelege jeweils einer ersten Teilnehmeridentifizierung zugeordnet werden, dass mindestens einer der Verrechnungsinstruktionen vor deren Übermittlung eine zweite Teilnehmeridentifizierung eingefügt wird, und dass die Berechtigung der beigefügten zweiten Teilnehmeridentifizierung überprüft wird, bevor die Verrechnungsinstruktion in der Instruktionsdatenbank (121) der ersten Teilnehmeridentifizierung zugeordnet gespeichert wird.

**10.** Computerprogrammprodukt, umfassend: ein computerlesbares Medium mit darin enthaltenen Computerprogrammcodemitteln zur Steuerung eines oder mehrerer Prozessoren eines computerbasierten Systems (1) zum Verrechnen von Kommunikationskosten eines Teilnehmers in einem Kommunikationsnetz (2), derart,
dass im computerbasierten System (1) eine oder mehrere Verrechnungsinstruktionen entgegengenommen werden, die Angaben zur Identifizierung eines Kontos umfassen, dem die Kommunikationskosten zu verrechnen sind,
dass die entgegengenommenen Verrechnungsinstruktionen im computerbasierten System (1) in einer Instruktionsdatenbank (121) jeweils zugeordnet zu einer Identifizierung des Teilnehmers und zugeordnet zu einer ersten Zeitangabe gespeichert werden,
dass im computerbasierten System (1) Kostenbelege entgegengenommen werden, die Angaben über Kommunikationskosten des Teilnehmers umfassen,
dass die entgegengenommenen Kostenbelege im computerbasierten System (1), jeweils zugeordnet zu der Identifizierung des Teilnehmers, gespeichert werden, und
dass im computerbasierten System (1) jeweils auf Grund der zugeordneten ersten Zeitangabe und einer in den gespeicherten Kostenbelegen enthaltenen zweiten Zeitangabe die gespeicherten Kostenbelege, die der Identifizierung des Teilnehmers zugeordnet sind, den gespeicherten Verrechnungsinstruktionen, die der Identifizierung des Teilnehmers zugeordnet sind, zugeordnet werden, um die in einem Kostenbeleg enthaltenen Kommunikationskosten des Teilnehmers auf ein Konto zu verrechnen, das durch die dem Kostenbeleg zugeordneten Verrechnungsinstruktionen bestimmt ist.

**11.** Computerprogrammprodukt gemäss Anspruch 10, **dadurch gekennzeichnet, dass** es weitere Computerprogrammcodemittel umfasst, die die Prozessoren des computerbasierten Systems (1) derart steuern, dass die Zuordnung der gespeicherten Kostenbelege zu den gespeicherten Verrechnungsinstruktionen im computerbasierten System (1), jeweils auf Grund der zugeordneten ersten und zweiten Zeitangaben und auf Grund eines den Verrechnungsinstruktionen zugeordneten Instruktionstyps, vorgenommen wird.

**12.** Computerprogrammprodukt gemäss einem der Ansprüche 10 und 11, **dadurch gekennzeichnet, dass** es weitere Computerprogrammcodemittel umfasst, die die Prozessoren des computerbasierten Systems (1) derart steuern, dass eine der im computerbasierten System (1) in einer Instruktionsdatenbank (121) gespeicherten Verrechnungsinstruktionen und/oder die zugeordnete erste Zeitangabe entsprechend Instruktionen, die im computerbasierten System (1) von einem berechtigten Teilnehmer über ein Kommunikationsnetz (4) entgegengenommen werden, verändert werden.

**13.** Computerprogrammprodukt gemäss einem der Ansprüche 10 bis 12, **dadurch gekennzeichnet, dass** es weitere Computerprogramm-Codernittel umfasst, die die Prozessoren des computerbasierten Systems (1) derart steuein, dass im computerbasierten System (1) die Verrechnungsinstruktionen und die Kostenbelege jeweils einer ersten Teilnehmeridentifizierung zugeordnet werden, und dass im computerbasierten System (1) die Berechtigung einer zweiten Teilnehmeridentifizierung überprüft wird, welche mindestens einer der entgegengenommenen Verrechnungsinstruktionen entnommen wird, bevor die mindestens eine Verrechnungsinstruktion in der Instruktionsdatenbank (121) der ersten Teilnehmeridentifizierung zugeordnet gespeichert wird.

**14.** Computerprogrammprodukt gemäss einem der Ansprüche 10 bis 13, **dadurch gekennzeichnet, dass** es weitere Computerprogramm-Codemittel umfasst, die die Prozessoren des computerbasierten Systems (1) derart steuern, dass die Verrechnungsinstruktionen im computerbasierten System (1) in Datenmeldungen über ein Mobilfunknetz entgegengenommen werden, und dass die erste Zeitangabe im computerbasierten System (1) jeweils auf Grund des Zeitpunkts der Übermittlung der Verrechnungsinstruktionen bestimmt wird.
